(19) Europäisches Patentamt
European Patent Office
Office européen des brevets

(11) Veröffentlichungsnummer: **0 346 715 B1**

(12) **EUROPÄISCHE PATENTSCHRIFT**

(45) Veröffentlichungstag der Patentschrift: **07.04.93**

(51) Int. Cl.[5]: **C09B 67/22**, D06P 1/18

(21) Anmeldenummer: **89110113.1**

(22) Anmeldetag: **05.06.89**

(54) **Mehrkomponenten-Mischungen blauer Dispersions-Azofarbstoffe für das Färben von synthetischen Fasern.**

(30) Priorität: **09.06.88 DE 3819563**

(43) Veröffentlichungstag der Anmeldung:
**20.12.89 Patentblatt 89/51**

(45) Bekanntmachung des Hinweises auf die Patenterteilung:
**07.04.93 Patentblatt 93/14**

(84) Benannte Vertragsstaaten:
**CH DE FR GB IT LI**

(56) Entgegenhaltungen:
**EP-A- 147 783**
**EP-A- 0 078 006**
**EP-A- 0 093 935**
**FR-A- 2 388 861**

(73) Patentinhaber: **HOECHST AKTIENGESELLSCHAFT**
**Postfach 80 03 20**
**W-6230 Frankfurt am Main 80(DE)**

(72) Erfinder: **Hähnke, Manfred, Dr.**
**Behringstrasse 13**
**W-6233 Kelkheim (Taunus)(DE)**
Erfinder: **Kühn, Reinhard**
**Heinrich-Bleicher-Strasse 39**
**W-6000 Frankfurt am Main 50(DE)**
Erfinder: **Bühler, Ulrich, Dr.**
**Kastanienweg 8**
**W-8755 Alzenau(DE)**

EP 0 346 715 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Polyester(PES)-Fasern können mit Dispersionsfarbstoffen durch Ausziehen aus wäßrigem Medium unter Anwendung von HT-Färbebedingungen bei Temperaturen zwischen 105° und 140°C oder unter Einsatz von sogenannten Carriern (Färbebeschleunigern) bei Temperaturen zwischen 95 und 106°C gefärbt werden.

Das herkömmliche Carrier-Färbeverfahren wird im industriellen Maßstab üblicherweise bei Kochtemperatur des Ausziehbades vorgenommen. Für eine solche Färbung der Synthesefasern beim Siedepunkt der wäßrigen Flotte sind jedoch nur wenige ausgewählte Dispersionsfarbstoffe für die Erzielung aller möglichen Farbtiefen geeignet. Viele Dispersionsfarbstoffe führen trotz der Mitwirkung eines Carriers nur zu Colorierungen mit geringen bis mittleren Farbtiefen.

Innerhalb der Nuancen des Dunkelblau- und Marineblau-Bereiches haben sich in der Praxis beim Färben von PES-Fasern unter Kochtemperatur-Bedingungen wohl die Anthrachinon-Derivate C.I. Disperse Blue 35 und C.I. Disperse Blue 81 als färberisch wichtigste Blau-Farbstoffe für die Herstellung von Typ- und Kombinationsfärbungen durchgesetzt. Andererseits ist es aber nicht mehr neu, daß derartige anthrachinoide Blau-Farbstoffe ganz allgemein lediglich eine relativ niedrige Farbstärke erbringen, was in der Regel auf hohen Farbstoffbedarf und somit erhebliche Gestehungskosten für die Färbungen (insbesondere im Falle der Erzeugung von höheren Farbtiefen) hinausläuft.

Darüber hinaus zeigen Dunkelblau- und Marineblau-Färbungen auf PES-Fasern, die mit C.I. Disperse Blue 35 oder C.I. Disperse Blue 81 hergestellt wurden, bei der Betrachtung unter Abendlicht (Glühlampe) einen starken Farbtonumschlag nach der Seite des roten Spektralbereiches, d.h. es tritt eine völlige Variabilität des Farbeindruckes je nach der Art der verwendeten Lichtquelle auf.

Des weiteren ergeben die Farbstoffe C.I. Disperse Blue 35 und C.I. Disperse Blue 81 bei der Färbung von PES-Fasern in tiefen Farbtönen nur eine im Vergleich zu anderen, üblichen Dispersionsfarbstoffen unbefriedigende Erschöpfung des Färbebades, so daß die verbleibenden, noch gefärbten Restfärbeflotten zu unerwünschten Abwasserbelastungen führen.

Wie der Fachmann indessen auch schon weiß, kann man aufgrund der Verwendung von Mischungen aus zwei oder drei speziell auszuwählenden blauen Dispersions-Azofarbstoffen beim Ausziehfärben von PES-Fasermaterial nach der Carrier-Färbemethode zu tiefen, klaren Blau-Färbungen kommen.

Dessenungeachtet bestand auf dem Gebiet des Färbens von PES-Fasern und deren Mischungen mit anderen Fasern nach dem Carrier-Färbeverfahren in Dunkelblau- und Marineblau-Farbtönen nach wie vor ein großer Bedarf bezüglich einer Verbesserung des färberischen Verhaltens sowie der Färberesultate im Vergleich zum derzeitigen Stand der Technik.

Bekanntlich sind für diesen Zweck in der Literatur bereits blaue Dispersions-Azofarbstoffe mit den folgenden Formeln I bis VIII vorgeschlagen worden:

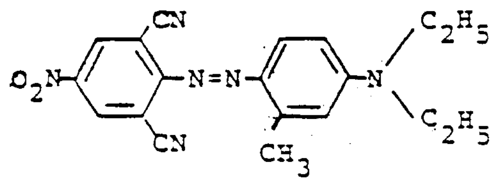

(I) DE-OS 31 21 981
Bsp. 1

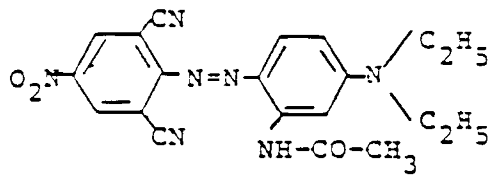

(II) C.I. Disperse Blue 165
(C.I.-Nr. 11077)

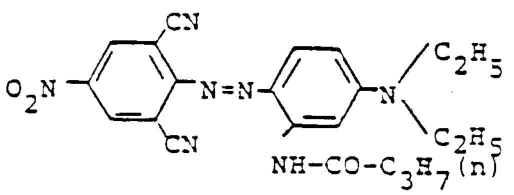

(III) DE-OS 30 09 635
Bsp. 1,
DE-OS 32 16 788
Formel B, Anspruch 2

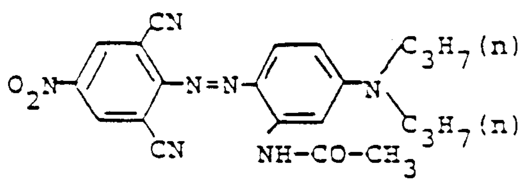

(IV)

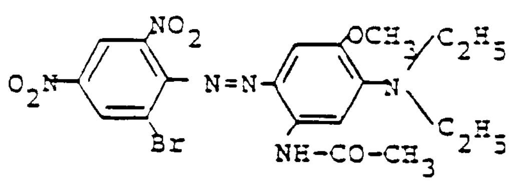

(V)

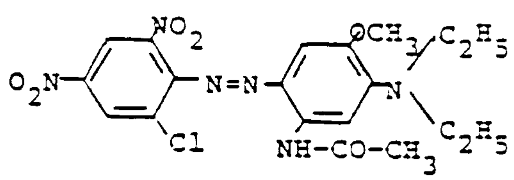

(VI)

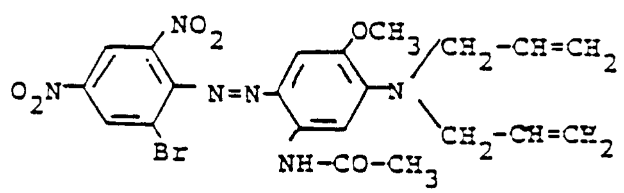

(VII)

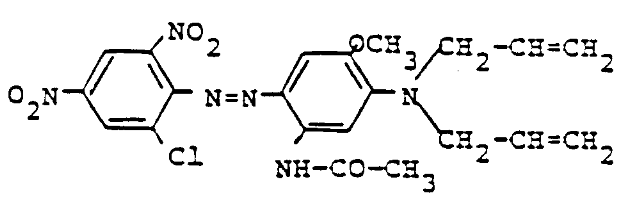

(VIII)

Alle diese Farbstoffe mit der formelmäßig angegebenen Struktur weisen eine Verhaltenscharakteristik bei der Färbung von PES-Fasern auf, die ihren Einsatz für die Erzielung einer neutralen Abendfarbe nach dem Carrier-Färbeverfahren einschränken oder gar unmöglich machen:

| Farbstoff der Formel | Färberisches Verhalten als Einzelfarbstoff |
|---|---|
| I: | Kein ausreichender Farbaufbau bis zu tiefen Blau-, Dunkelblau-, Marineblau-Tönen, dabei mangelnde Färbebaderschöpfung. Starker Farbtonumschlag nach der roten Seite des sichtbaren Spektrums im Abendlicht. |
| II bis VI: | Farbaufbau und Färbebaderschöpfung noch schlechter als im Fall I, ganz besonders gilt dies für II. Farbtonumschlag ebenfalls nach der roten Seite des sichtbaren Spektrums im Abendlicht. |
| V bis VIII: | Farbaufbau und Färbebaderschöpfung wie im Fall III. Farbtonumschlag nach der grünen Seite des sichtbaren Spektrums im Abendlicht. |

In Anbetracht der zuvor geschilderten Sachlage im Hinblick auf die erreichbaren Färbeergebnisse und auch Preisvorstellungen bestand die Aufgabe der vorliegenden Erfindung darin, leistungsfähige Farbstoffmischungen auf Basis der Dicyanazo-Reihe zu entwickeln, welche eine coloristisch vorteilhafte Substitution von anthrachinoiden Dispersionsfarbstoffen des Dunkelblau- und Marineblau-Bereiches, insbesondere von C.I. Disperse Blue 35 und C.I. Disperse Blue 81, vornehmlich für die Anwendung im Carrier-Färbeverfahren gestatten, wobei die Gesichtspunkte günstige Kosten, Verfügbarkeit, Zugänglichkeit, mindestens Gleichwertigkeit im Ziehverhalten und Farbaufbau, neutrale Abendfarbe sowie niedrige Begleitfaseranschmutzung für die Eignung der Ersatzprodukte ausschlaggebend sein sollten.

Als Lösung der an den Fachmann gestellten Aufgabe wurde erfindungsgemäß nun gefunden, daß man die erwähnten Nachteile der blauen Einzelfarbstoffe vom obengenannten Typ beim Ausziehfärben von insbesondere PES-Fasern durch gezielten Einsatz einer Kombination aus solchen nachfolgend beschriebenen Azoverbindungen vermeiden kann. Aufgrund von experimentellen Untersuchungen hat sich nämlich überraschenderweise herausgestellt, daß Mischungen von mehreren dieser Einzelfarbstoffe nur beim Vorliegen bestimmter konstituioneller Merkmale sich im Ziehverhalten synergistisch verhalten, während Mischungen anderer Farbstoffe kein besseres Ziehverhalten als die entsprechenden Einzelfarbstoffe aufweisen.

Gegenstand der vorliegenden Erfindung sind demnach FarbstoffPräparationen in Form von Mehrkomponenten-Mischungen oder Mischkristallen von blauen Dispersions-Azofarbstoffen, dadurch gekennzeichnet, daß sie sich
aus 10 bis 40 Gewichtsteilen des Farbstoffes der Formel I,
und 5 bis 30 Gewichtsteilen des Farbstoffes der Formel II,

und gegebenenfalls der Formeln III und/oder IV, sowie aus den Farbstoffen der Formeln V und/oder VI und/oder VII und/oder VIII zusammensetzen oder diese enthalten.

Bevorzugte Verhältnisse sind nach dieser Erfindung dann gegeben, wenn die Farbstoffpräparationen

a) eine Mischung oder einen Mischkristall aus den Farbstoffen der Formeln I, II und III, sowie einen der Farbstoffe der Formeln V, VI, VII oder VIII, oder

b) eine Mischung oder einen Mischkristall aus den Farbstoffen der Formeln I, II und IV, sowie einem der Farbstoffe der Formeln V, VI, VII oder VIII

darstellen.

Als besonders vorteilhaft hat sich erfindungsgemäß eine Farbstoffpräparation erwiesen, welche
aus 10 bis 40, vorzugsweise 15 bis 30 Gewichtsteilen des Farbstoffes der Formel I,

und 5 bis 30, vorzugsweise 10 bis 20 Gewichtsteilen des Farbstoffes der Formel II,
und 0 bis 20, vorzugsweise 3 bis 15 Gewichtsteilen der Farbstoffe der Formeln III und/oder IV,
sowie 20 bis 75, vorzugsweise 35 bis 70 Gewichtsteilen der Farbstoffe der Formeln V, VI, VII und/oder VIII besteht und worin die anteiligen Mengen an den zugrundeliegenden Einzelfarbstoffen jeweils auf ein Gesamtgewicht der Präparation von 100 Gewichtsteilen an den Farbstoffen der Formeln I bis VIII berechnet und (im Falle von Handelsprodukten) auf den Gehalt an Reinfarbstoff bezogen sind.

Farbstoffpräparationen mit den erfindungsgemäßen Merkmalen, die als Mischung oder als Mischkristall in Form einer z.B. durch Vermahlung mittels Dispergiermittel(n) resultierenden Feinverteilung (in färbefertigem Zustand) vorliegen, sind hervorragend geeignet für das Ausziehfärben von bekannten Synthesefasern (z.B. zusammengesetzt aus Polyester- oder Celluloseester-Fasermaterialien) für sich allein oder als Bestandteil von solche synthetischen Fasern aufweisenden Mischungen mit Naturfasern (wie Wolle, Baumwolle) oder Regeneratfasern (vornehmlich Regeneratcellulose) bei Kochtemperatur (95° - 100°C) des wäßrigen Färbemediums oder unter Hochtemperatur-Bedingungen (105° - 140°C), in Gegenwart oder Abwesenheit eines praxisüblichen Carriers. Sie werden nach der vorliegenden Erfindung eingesetzt als Dispersions-Blaufarbstoff zur Erzielung von vor allem blauen Typfarbtönen auf den Synthesefasern bzw. der Synthesefaserkomponente von Fasermischungen, oder auch von Kombinationsfarbtönen unter begleitender Verwendung weiterer Dispersions-Blaufarbstoffe von chemisch unterschiedlicher Struktur als die Azoverbindungen der Formeln I bis VIII, z.B. anthrachinoider blauer Dispersionsfarbstoffe, gegebenenfalls noch im Beisein von Dispersionsfarbstoff-Mischkomponenten unterschiedlicher Konstitution, welche von sich aus andere Nuancen als Blau erbringen. Ein Färbeverfahren der genannten Art sowie die Verwendung der neuen Farbstoffpräparationen auf der erwähnten Grundlage stellen zugleich weitere Gegenstände der vorliegenden Erfindung dar.

Die Herstellung der erfindungsgemäßen Präparationen aus den Dispersions-Blaufarbstoffen der Formeln I bis VIII kann erfolgen durch das Mischen fertig gefinishter (in Wasser fein dispergierbarer) Farbstoffpräparationen der zugrundeliegenden Einzelfarbstoffe; durch gemeinsames Finishen der zugrundeliegenden Einzelfarbstoffe als Gemisch, d.h. durch gemeinsame Naßvermahlung von Mischungen aus den Einzelfarbstoffen in Gegenwart von herkömmlichen nichtionischen oder anionischen Dispergiermitteln (z.B. eines Ligninsulfonats) in einer üblichen Perlmühle, gegebenenfalls unter Bedingungen, wobei die Bildung von Mischkristallen aus den zugrundeliegenden Einzelfarbstoffen eintreten kann, und eventuell anschließender Sprühtrocknung; oder durch Finishen eines aufgrund spezieller Umsetzungsbedingungen, beispielsweise durch gemeinsame Azo-Kupplung oder gemeinsamen Cyanaustausch, angefallenen Mischkristalle aus den dabei beteiligten einzelnen Farbstoffkomponenten.

Mittels der erfindungsgemäß durch ihre Struktur erläuterten Farbstoffpräparationen lassen sich als synthetisches Fasergut in erster Linie hydrophobe Polyesterfasern auf Basis von Polyethylenterephthalat, Polybutylenterephthalat oder Polycyclohexylenterephthalat colorieren, sowie auch Fasern, welche sich von Mischpolymerisaten solcher PES mit Di- oder Triethylenglykol, Isophthalsäure, oder Benzo-1,4-di-phosphorige Säure als inkorporierten Bestandteil herleiten. Es können aber ebensogut anders modifizierte PES-Fasern mit den erfindungsgemäßen Farbstoffmischungen gefärbt werden.

Weiterhin können zum erfindungsgemäßen Färben die PES-Fasern mit Fasermaterial natürlichen Ursprungs wie Wolle, Baumwolle, oder mit Regeneratcellulose in Mischungsverhältnissen von 10 - 90 %, bevorzugt 30 - 70 % PES-Faseranteil gemischt sein. Desgleichen kommen Cellulose-2 1/2-acetat und Cellulosetriacetat als Färbesubstrat für die erfindungsgemäßen Farbstoffmischungen in Frage.

Die vorliegende Erfindung ist prinzipiell anwendbar auf das Färben des zuvor genannten Fasermaterials in verschiedenen Verarbeitungszuständen, beispielsweise als Flocke, Kammzug, Garn oder Stückware.

Das Färben von synthetischen Fasern bzw. deren Mischungen mit den erfindungsgemäßen Farbstoffmischungen oder Farbstoffmischkristallen wird nach dem herkömmlichen Auszieh-Färbeverfahren ausgeführt. Besonders erwähnt werden soll in diesem Zusammenhang die Anwendung dieser Technik für das Ausziehfärben unter Kochtemperatur-Bedingungen, wobei in zur Atmosphäre hin offenen Färbeapparaten (z.B. Haspelkufen) unter Mitwirkung von praxisüblichen Carriern auf Basis von beispielsweise o-Phenylphenol, Di- oder Trichlor-benzolen, Methyl- oder Chlor-naphthalinen, Benzoesäure- oder Kresotinsäurealkylestern, Diphenyl u.a. sowie gegebenenfalls in Gegenwart üblicher Dispergier- und/oder Egalisiermittel gearbeitet wird. Darüber hinaus kann die Färbung auch nach einer konventionellen Hochtemperatur(HT)-Ausziehmethode bei Temperaturen zwischen 105° und 140°C erfolgen. An die eigentliche Färbung schließt sich vorteilhafterweise eine reduktive Reinigung oder eine dispergiermittelunterstützte Nachbehandlung der gefärbten Ware zur Entfernung nicht restlos fixierter Farbstoffanteile an.

Bei Einsatz von Mischungen aus PES-Fasern mit Wolle, Baumwolle oder Regeneratcellulose-Fasern kann die Begleitfaserkomponente mit geeigneten Farbstoffen im gleichen oder abweichenden Farbton (Melangen, Webmuster) vor oder nach Durchführung der PES-Färbung gefärbt werden.

Die Verwendung der beanspruchten Farbstoffmischungen bzw. Mischkristalle kann für sich (d.h. im Blau-Bereich) zur Erzeugung blauer Typfärbungen sowie auch in Kombination mit anderen handelsüblichen Dispersionsfarbstoffen von unterschiedlichem strukturellen Typ erfolgen, die ebenfalls blaue Nuancen ergeben, oder sogar in Verbindung mit solchen Farbstoffen, welche andere bunte Farbtöne als Blau liefern, beispielsweise gelben und roten Dispersionsfarbstoffen (Trichromie). Eine Kombinierbarkeit dieser Art ist allerdings an die Voraussetzung gebunden, daß unter den vorherrschenden Färbebedingungen alle beteiligten Farbstoffe im wesentlichen gleiches Ziehverhalten aufweisen. Die erzielbare Lichtechtheit dieser Färbungen ist im Blau- sowie im Trichromie-Bereich gut. Solche Nuancierfarbstoffe können bereits von vornherein in der färbefertigen Präparation der Farbstoffe mit den Formeln I bis VIII vorhanden sein oder sie werden erst bei der Durchführung der Färbeoperation der Flotte unmittelbar zugesetzt.

Durch die Benutzung der erfindungsgemäßen Farbstoffmischungen oder Mischkristalle werden je nach Mischungsverhältnis der Einzelkomponenten auf dem Synthesefasermaterial klar tiefe Dunkelblau- oder Marineblau-Färbungen erhalten. Die Farbtiefe ist wesentlich höher als bei Verwendung von anthrachinoiden Blau-Farbstoffen und deren Mischungen mit verschiedenen Azofarbstoffen.

Die Färbebaderschöpfung oder - anders ausgedrückt - der Restfarbstoffgehalt im Färbebad bei Gleichgewichtseinstellung ist im Falle des Einsatzes der beanspruchten Farbstoffmischungen bzw. Mischkristalle wesentlich geringer als z.B. bei Verwendung von C.I. Disperse Blue 35 und C.I. Disperse Blue 81.

Ein ganz besonders überraschendes Wesensmerkmal der erfindungsgemäßen Farbstoffmischungen bzw. Mischkristalle ist deren verbesserte Färbebadausnutzung im Vergleich zu den betreffenden Einzelfarbstoffen und im Vergleich zu Mischungen aus jeweils bloß zwei der beschriebenen Komponenten.

Des weiteren ergibt sich bei der Anwendung der erfindungsgemäßen Farbstoffmischungen bzw. Mischkristalle beim Kochtemperaturfärben von Fasergemischen unter Verwendung bekannter Carrier eine gegenüber C.I. Disperse Blue 35 und C.I. Disperse Blue 81 wesentlich geringere Anschmutzung von Wolle-, Baumwolle- oder Regeneratcellulose-Begleitfaser-Komponenten. Zudem ist die geringfügige Anschmutzung durch eine praxisübliche reduktive Nachbehandlung (z.B. mit Natriumdithionit/Natronlauge, Natriumdithionit/Ammoniak) bei den Färbungen mit den beanspruchten Farbstoffmischungen bzw. Mischkristallen wieder restlos entfernbar.

Die mit den beanspruchten Farbstoffmischungen erhältlichen Dunkelblau- und Marineblau-Färbungen weisen im Vergleich zu Färbungen auf Basis der Anthrachinon-Farbstoffe C.I. Disperse Blue 35 und C.I. Disperse Blue 81 unter Kunstlicht einen nahezu stabilen Farbton auf.

In den nachstehend aufgeführten Beispielen sind unter Teilen und Prozenten, falls nicht anders vermerkt ist, Gewichtsteile und Gewichtsprozente zu verstehen.

**Beispiel 1**

Zwecks Demonstration einer Färbung nach der vorliegenden Erfindung stellt man sich aus einer Mischung von
25 Teilen des Dispersions-Blaufarbstoffes der Formel I,
15 Teilen des Dispersions-Blaufarbstoffes der Formel II,
10 Teilen des Dispersions-Blaufarbstoffes der Formel III,
50 Teilen des Dispersions-Blaufarbstoffes der Formel V
und 400 Teilen eines herkömmlichen Dispergiermittels aus der Reihe der Ligninsulfonate durch wäßriges Vermahlen in einer Perlmühle eine feinverteilte Farbstoffdispersion her und trocknet diese anschließend durch Sprühtrocknung.

Für das anschließende Ausziehfärben unter Einhaltung von Kochtemperaturbedingungen werden als Stückware 100 Teile einer Polyesterfaser vom Polyethylenterephthalat-Typ verwendet und damit wird eine Färbebombe beschickt, welche als Ansatzbad 1000 Teile Wasser von 60 °C, 2 Teile kristallisiertes Natriumacetat, 3 Teile 30 %ige Essigsäure, 5 Teile eines handelsüblichen Carriers auf Basis von Diphenyl und 4 Teile der in obiger Weise als Pulver zubereiteten Farbstoffpräparation enthält. Diese Ausziehflotte samt dem darin befindlichen Färbegut erhitzt man nunmehr innerhalb von 30 Minuten auf 98° - 100 °C und beläßt dieselben für eine Behandlungsdauer von 60 Minuten bei der eingestellten Temperatur.

Nach dem Abkühlen der Flotte, Spülen der so gefärbten Ware mit Wasser, hierauf reduktivem Nachreinigen im wäßrigen Medium unter Mitwirkung von Natriumdithionit/Natronlauge bei 80 °C und schließlich Trocknen erhält man als färberisches Ergebnis eine dunkelblaue Färbung.

Bei Beendigung der Färbeoperation bleiben als Restgehalt keine merklichen Farbstoffmengen im ausgezogenen Färbebad zurück.

**Beispiel 2**

Setzt man als zu färbendes Textilgut anstelle der im Beispiel 1 genannten 100 Teile 100 %iges Polyesterfasermaterial hier eine innige Mischung aus 70 Teilen dieser Polyesterfaser und 30 Teilen von entweder

a) Baumwolle oder
b) Regeneratcellulose-Fasern oder
c) Wolle

in Garnform ein und verfährt man zum Ausziehfärben bei Kochtemperatur im übrigen wie dort beschrieben ist, dann wird in diesem Falle auf dem Polyesterfaser-Anteil der Ware eine marineblaue Färbung erzielt mit nur geringer Anschmutzung der Baumwoll-, Regeneratcellulose-Faser- bzw. Woll-Komponente.

Durch eine Nachbehandlung des so gefärbten Mischgarns während 15 Minuten bei 80 ° C mittels einer wäßrigen Flotte, welche als reduzierend wirkende Stoffe 3 g/l Natriumdithionit und 5 g/l Natronlauge aufweist, wird der angeblutete Baumwoll- bzw. Regeneratcellulose-Faser-Anteil der Ware wieder völlig entfärbt. Im Falle der Reinigung des Woll-Anteils muß wegen möglicher Faserschädigung auf die Mitverwendung von Natronlauge verzichtet werden.

**Beispiel 3**

Man verwendet für das Ausziehfärben von 100 Teilen eines Polyesterfasermaterials bestehend aus einem Mischpolymerisat auf Basis von Polyethylenterephthalat und geringen Anteilen Polybutylenterephthalat in Stückform auf einer bekannten Jet-Färbemaschine eine Flotte der Zusammensetzung 1000 Teile Wasser von 60 ° C, 2 Teile 40 %ige Essigsäure, 6 Teile eines handelsüblichen Carriers auf Basis von o-Phenyl-phenol, 0,5 Teile eines handelsüblichen Gelb-Farbstoffes des Typs C.I. Disperse Yellow 54 (C.I.-Nr. 47020), 0,2 Teile eines handelsüblichen Rot-Farbstoffes des Typs C.I. Disperse Red 73 (C.I.-Nr. 11116) sowie 4 Teile einer flüssigen Farbstoffpräparation, die durch wäßrige Perlvermahlung von 30 Teilen eines Nonylphenol-oxethylates (mit 25 Mol an umgesetztem Ethylenoxid), 40 Teilen eines herkömmlichen Dispergiermittels aus der Reihe der sulfonierten Naphthalin-Formaldehyd-Kondensationsprodukte, 200 Teile Wasser sowie einer Mehrkomponenten-Mischung aus

12,5 Teilen des Dispersions-Blaufarbstoffes der Formel I,
5 Teilen des Dispersions-Blaufarbstoffes der Formel II,
2,5 Teilen des Dispersions-Blaufarbstoffes der Formel III und
17,5 Teilen des Dispersions-Blaufarbstoffes der Formel V,

hergestellt wurde.

Zur Durchführung der Färbeoperation erwärmt man das Färbebad innerhalb von 45 Minuten auf 106 ° C und färbt das Textilgut noch einmal 45 Minuten bei dieser Temperatur. Anschließend wird der Färbejet auf 70 ° C abgekühlt und die so gefärbte Ware wird während weiterer Umläufe mit Wasser gespült. Nach erfolgter Fertigstellung erhält man eine Marineblau-Färbung mit guten Echtheitseigenschaften sowie mit einwandfreier Egalität.

**Beispiel 4**

Verfährt man beim Färben entsprechend der Vorschrift wie im Beispiel 3 angegeben, aber ohne die Mitverwendung des blauen Farbstoffes der Formel III, so wird ein vergleichbares Färberesultat wie dort erreicht.

**Beispiel 5**

Wenn zum Färben nach dem Rezept von Beispiel 1 der Farbstoff der Formel III innerhalb der dort benutzten pulverförmigen Farbstoffpräparation durch die entsprechende Menge des blauen Farbstoffes der Formel IV ersetzt wird und sonst die übrigen Maßnahmen beibehalten bleiben, dann erhält man ein ähnlich gutes färberisches Ergebnis.

**Beispiel 6**

Wird im Falle der Ausziehfärbung nach Beispiel 3 der Farbstoff der Formel V durch die entsprechende Menge eines blauen Farbstoffes der Formel VI, VII oder VIII ausgetauscht und wird bei der Färbung zusätzlich auf die Mitverwendung des Farbstoffes C.I. Disperse Red 73 verzichtet, so erzielt man ebenfalls

eine Marineblau-Färbung mit guten Echtheitseigenschaften.

**Beispiel 7**

Eine gleichwertige Ausziehfärbung von Polyesterfaser-Stückware wie im Beispiel 1 wird erhalten, wenn man sich entsprechend den dortigen Angaben eine Farbstoffdispersion zubereitet, welche hinsichtlich der fäbrerischen Komponenten anstelle der aus Beispiel 1 ersichtlichen Zusammensetzung hier aus einer Mischung von
18 Teilen des Dispersions-Blaufarbstoffes der Formel I,
10 Teilen des Dispersions-Blaufarbstoffes der Formel II,
6 Teilen des Dispersions-Blaufarbstoffes der Formel III und
66 Teilen des Dispersions-Blaufarbstoffes der Formel V
besteht, und man die Maßnahmen zum Färben in analoger Weise vornimmt.

**Patentansprüche**

**1.** Farbstoffpräparation in Form einer Mehrkomponenten-Mischung oder eines Mischkristalles von blauen Dispersions-Azofarbstoffen, dadurch gekennzeichnet, daß sie
aus 10 bis 40 Gewichtsteilen des Farbstoffes der Formel I,
und 5 bis 30 Gewichtsteilen des Farbstoffes der Formel II,

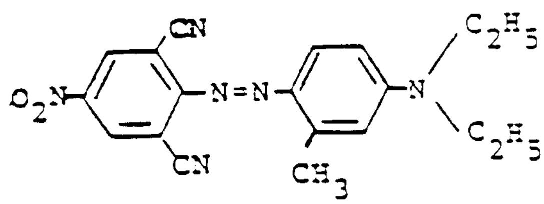 (I)

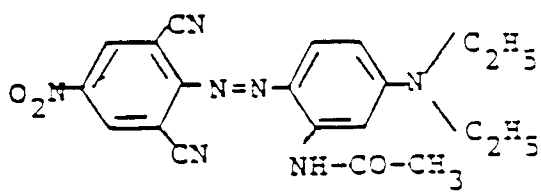 (II)

und gegebenenfalls der Formeln III und/oder IV

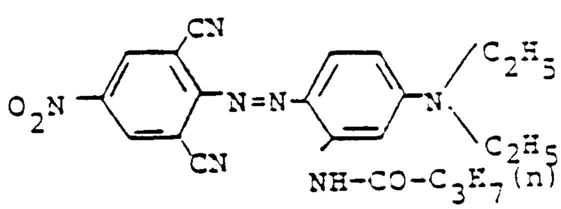 (III)

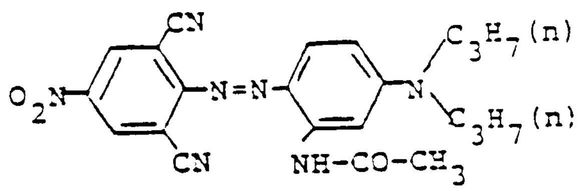 (IV)

sowie aus den Farbstoffen der Formeln V und/oder VI, und/oder VII und/oder VIII,

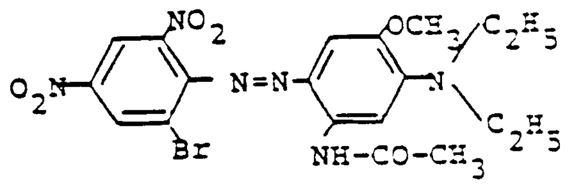

(V)

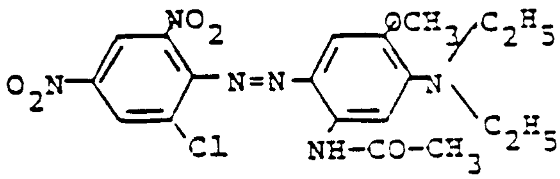

(VI)

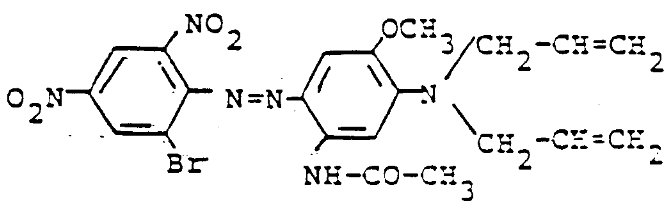

(VII)

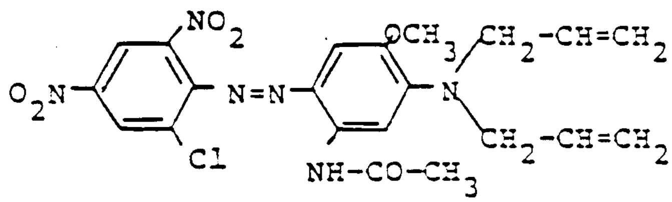

(VIII)

besteht oder diese enthält und worin die anteiligen Mengen an den zugrundeliegenden Einzelfarbstoffen jeweils auf ein Gesamtgewicht der Präparation von 100 Gewichtsteilen an den Farbstoffen der Formeln I bis VIII berechnet und auf den Gehalt an Reinfarbstoff bezogen sind.

**2.** Farbstoffpräparation nach Anspruch 1, dadurch gekennzeichnet, daß sie eine Mischung oder einen Mischkristall aus den Farbstoffen der Formeln I, II und III, sowie einem der Farbstoffe der Formeln V, VI, VII oder VIII darstellt.

**3.** Farbstoffpräparation nach Anspruch 1, dadurch gekennzeichnet, daß sie eine Mischung oder einen Mischkristall aus den Farbstoffen der Formeln I, II und IV, sowie einem der Farbstoffe der Formeln V, VI, VII oder VIII darstellt.

**4.** Farbstoffpräparation nach Anspruch 1 oder 2 oder nach Anspruch 1 oder 3, dadurch gekennzeichnet, daß sie
aus 10 bis 40 Gewichtsteilen des Farbstoffes der Formel I,
und 5 bis 30 Gewichtsteilen des Farbstoffes der Formel II,
und 0 bis 20 Gewichtsteilen der Farbstoffe der Formeln III und/oder IV,
sowie 20 bis 75 Gewichtsteilen der Farbstoffe der Formeln V, VI, VII und/oder VIII
besteht und worin die anteiligen Mengen an den zugrundeliegenden Einzelfarbstoffen jeweils auf ein Gesamtgewicht der Präparation von 100 Gewichtsteilen an den Farbstoffen der Formeln I bis VIII berechnet und auf den Gehalt an Reinfarbstoff bezogen sind.

**5.** Farbstoffpräparation nach einem oder mehreren der Ansprüche 1 bis 4, dadurch gekennzeichnet, daß sie
aus 15 bis 30 Gewichtsteilen des Farbstoffes der Formel I,
und 10 bis 20 Gewichtsteilen des Farbstoffes der Formel II,
und 3 bis 15 Gewichtsteilen der Farbstoffe der Formeln III und/oder IV,
sowie 35 bis 70 Gewichtsteilen der Farbstoffe der Formeln V, VI, VII und/oder VIII

besteht und worin die anteiligen Mengen an den zugrundeliegenden Einzelfarbstoffen jeweils auf ein Gesamtgewicht der Präparation von 100 Gewichtsteilen an den Farbstoffen der Formeln I bis VIII berechnet und auf den Gehalt an Reinfarbstoff bezogen sind.

**6.** Farbstoffpräparation nach einem oder mehreren der Ansprüche 1 bis 5, dadurch gekennzeichnet, daß sie zusätzlich mindestens einen weiteren Dispersionsfarbstoff von unterschiedlicher chemischer Struktur als die der Farbstoffe gemäß den Formeln I bis VIII enthält, welcher von sich aus als Nuance ebenfalls Blau ergibt.

**7.** Farbstoffpräparation nach einem oder mehreren der Ansprüche 1 bis 6, dadurch gekennzeichnet, daß sie zusätzlich mindestens einen weiteren Dispersionsfarbstoff von unterschiedlicher chemischer Struktur als die der Farbstoffe gemäß den Formeln I bis VIII enthält, welcher von sich aus eine andere Nuance als Blau ergibt.

**8.** Farbstoffpräparation nach einem oder mehreren der Ansprüche 1 bis 5, dadurch gekennzeichnet, daß die Mischung oder der Mischkristall aus den Dispersionsfarbstoffen der Formeln I bis VIII, gegebenenfalls unter Teilnahme mindestens einer weiteren Farbstoff-Mischkomponente gemäß den Ansprüchen 6 oder 7, in Form einer durch Vermahlung mittels Dispergiermittel(n) resultierenden Feinverteilung im färbefertigen Zustand vorliegt.

**9.** Farbstoffpräparation nach Anspruch 8 aus den Dispersionsfarbstoffen der Formeln I bis VIII, erhältlich
- durch Mischen fertig gefinishter Farbstoffpräparationen der zugrundeliegenden Einzelfarbstoffe, oder
- durch gemeinsames Finishen der zugrundeliegenden Einzelfarbstoffe als Gemisch, gegebenenfalls unter Bedingungen, wobei die Bildung eines Mischkristalles aus den Einzelkomponenten eintreten kann, oder
- durch Finishen eines durch gemeinsame Azo-Kupplung oder gemeinsamen Cyanaustausch angefallenen Mischkristalles aus den zugrundeliegenden Einzelfarbstoffen,

gegebenenfalls unter Teilnahme mindestens einer weiteren Farbstoff-Mischkomponente gemäß den Ansprüchen 6 oder 7.

**10.** Verwendung einer Farbstoffpräparation nach einem oder mehreren der Ansprüche 1 bis 5 als Dispersions-Blaufarbstoff zur Erzielung von Typ- oder Kombinationsfarbtönen auf Synthesefasern für sich allein oder solche synthetischen Fasern aufweisenden Mischungen in einem Ausziehfärbeprozeß.

**11.** Verwendung einer Farbstoffpräparation nach einem oder mehreren der Ansprüche 1 bis 5 in Kombination mit mindestens einer weiteren Farbstoff-Mischkomponente gemäß den Ansprüchen 6 oder 7 zur Erzielung einer anderen Nuance als Blau in einem Ausziehfärbeprozeß.

**12.** Verfahren zum Ausziehfärben von Textilmaterial aus Synthesefasern für sich allein oder als Bestandteil von solche synthetische Fasern aufweisenden Mischungen mit Naturfasern oder Regeneratfasern, dadurch gekennzeichnet, daß man als Dispersions-Blaufarbstoff für Typ- und Kombinationsfärbungen eine Farbstoffpräparation gemäß den Ansprüchen 1 bis 5 einsetzt.

**13.** Verfahren nach Anspruch 12, dadurch gekennzeichnet, daß das Synthesefasermaterial aus Polyesterfasern oder Cellulose-2 1/2-acetatfasern oder Cellulose-triacetatfasern zusammengesetzt ist.

**14.** Verfahren nach Anspruch 13, dadurch gekennzeichnet, daß es sich bei dem Polyesterfasermaterial um ein Mischpolymerisat von einem Estermonomeren mit einem Polyethylenglykol, Isophthalsäure oder einer polymerisierbaren Phosphorverbindung handelt.

**15.** Verfahren nach Anspruch 12, dadurch gekennzeichnet, daß die synthetische Fasern aufweisenden Mischungen aus Polyesterfasermaterialien mit Wolle und/oder Cellulosefasern aufgebaut sind.

**16.** Verfahren nach Anspruch 12, dadurch gekennzeichnet, daß man die Färbeoperation nach der Ausziehfärbetechnik unter Hochtemperatur(HT)-Bedingungen durchführt.

**17.** Verfahren nach Anspruch 12, dadurch gekennzeichnet, daß man die Färbeoperation nach der Ausziehfärbetechnik unter atmosphärischen Bedingungen bei Kochtemperatur des wäßrigen Färbemediums, gegebenenfalls in Gegenwart eines Carriers durchführt.

**18.** Verfahren nach Anspruch 12, dadurch gekennzeichnet, daß man die Farbstoffpräparation gemäß den Ansprüchen 1 bis 5 zur Färbeoperation im Kombination mit mindestens einer weiteren Farbstoff-Mischkomponente gemäß den Ansprüchen 6 oder 7 einsetzt.

**19.** Textilmaterial aus Synthesefasern für sich allein oder als Bestandteil von solche synthetische Fasern aufweisenden Mischungen, welches mit einer Farbstoffpräparation gemäß den Ansprüchen 1 bis 9 gefärbt worden ist.

**20.** Textilmaterial aus Synthesefasern für sich allein oder als Bestandteil von solche synthetische Fasern aufweisenden Mischungen, welches nach einem Verfahren gemäß den Ansprüchen 12 bis 18 gefärbt worden ist.

## Claims

**1.** A dye formulation in the form of a multi-component mixture or a mixed crystal of blue disperse azo dyes, which consists of 10 to 40 parts by weight of the dye of the formula I and 5 to 30 parts by weight of the dye of the formula II

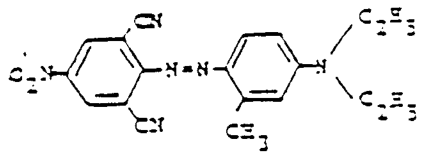

(I)

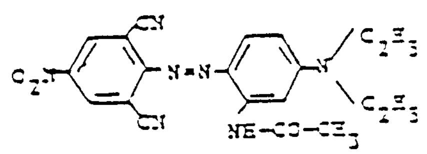

(II)

and, if desired, of the formulae III and/or IV

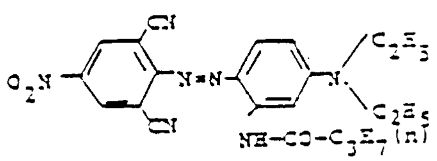

(III)

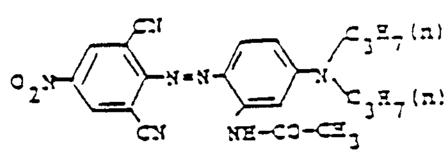

(IV)

and of the dyes of the formulae V and/or VI and/or VII and/or VIII

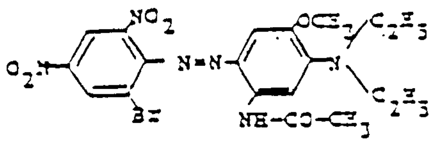 (V)

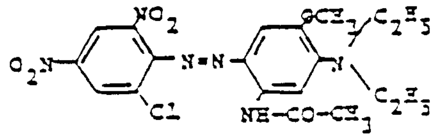 (VI)

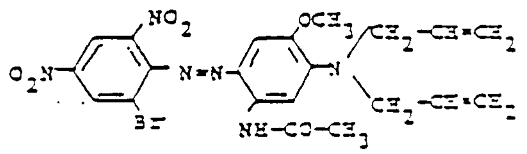 (VII)

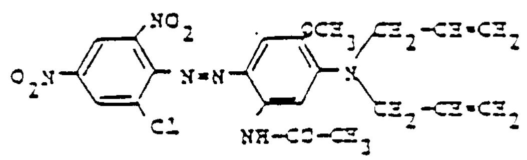 (VIII)

or contains these dyes and in which the relative amounts of the underlying individual dyes are each calculated relative to a total weight of the formulation of 100 parts by weight of the dyes of the formulae I to VIII and are based on the content of pure dye.

**2.** A dye formulation as claimed in claim 1, which is a mixture or a mixed crystal of the dyes of the formulae I, II and III, and one of the dyes of the formulae V, VI, VII or VIII.

**3.** A dye formulation as claimed in claim 1, which is a mixture or a mixed crystal of the dyes of the formulae I, II and IV, and one of the dyes of the formulae V, VI, VII or VIII.

**4.** A dye formulation as claimed in claim 1 or 2 or as claimed in claim 1 or 3, which consists of 10 to 40 parts by weight of the dye of the formula I, and 5 to 30 parts by weight of the dye of the formula II, and 0 to 20 parts by weight of the dyes of the formulae III and/or IV, and 20 to 75 parts by weight of the dyes of the formulae V, VI, VII and/or VIII and in which the relative amounts of the underlying individual dyes are each calculated relative to a total weight of the formulation of 100 parts by weight of the dyes of the formulae I to VIII and are based on the content of pure dye.

**5.** A dye formulation as claimed in one or more of claims 1 to 4, which consists of 15 to 30 parts by weight of the dye of the formula I, and 10 to 20 parts by weight of the dye of the formula II, and 3 to 15 parts by weight of the dyes of the formulae III and/or IV, and 35 to 70 parts by weight of the dyes of the formulae V, VI, VII and/or VIII and in which the relative amounts of the underlying individual dyes are each calculated relative to a total weight of the formulation of 100 parts by weight of the dyes of the formulae I to VIII and are based on the content of pure dye.

**6.** A dye formulation as claimed in one or more of claims 1 to 5, which additionally contains at least one further disperse dye of a different chemical structure from that of the dye according to formulae I to VIII, which by itself also produces the shade blue.

**7.** A dye formulation as claimed in one or more of claims 1 to 6, which additionally contains at least one further disperse dye of a different chemical structure from that of the dyes according to formulae I to VIII, which by itself gives a shade different from blue.

**8.** A dye formulation as claimed in one or more of claims 1 to 5, wherein the mixture or the mixed crystal of the disperse dyes of the formulae I to VIII, if appropriate with the participation of at least one further dye mix component as claimed in claims 6 or 7, is present in a state ready to use for dyeing in finely divided form obtained by milling by means of a dispersant(s).

**9.** A dye formulation as claimed in claim 8 consisting of the disperse dyes of the formulae I to VIII, obtainable

- by mixing ready-finished dye formulations of the underlying individual dyes, or
- by conjoint finishing of the underlying individual dyes as a mixture, if appropriate under conditions under which the formation of a mixed crystal from the individual components can take place, or
- by finishing a mixed crystal of the underlying individual dyes formed by joint azo coupling or joint cyano exchange,

if appropriate with the participation of at least one further dye mix component as claimed in claims 6 or 7.

**10.** Use of a dye formulation as claimed in one or more of claims 1 to 5 as disperse blue dye for achieving self-shades or combination shades on synthetic fibers by themselves or mixtures containing these synthetic fibers in an exhaustion dyeing process.

**11.** Use of a dye formulation as claimed in one or more of claims 1 to 5 in combination with at least one further dye mix component as claimed in claims 6 or 7 for achieving a shade different from blue in an exhaustion dyeing process.

**12.** A process for the exhaustion dyeing of textile material of synthetic fibers by themselves or as a component of mixtures containing these synthetic fibers with natural fibers or regenerated fibers, wherein the disperse blue dye used for the self-shade and combination shade dyeing is a dye formulation as claimed in claims 1 to 5.

**13.** The process as claimed in claim 12, wherein the synthetic fiber material is composed of polyester fibers or secondary cellulose acetate fibers or cellulose triacetate fibers.

**14.** The process as claimed in claim 13, wherein the polyester fiber material is a mixed polymer of an ester monomer with a polyethylene glycol, isophthalic acid or a polymerizable phosphorus compound.

**15.** The process as claimed in claim 12, wherein the mixtures which contain synthetic fibers are composed of polyester fiber materials and wool and/or cellulose fibers.

**16.** The process as claimed in claim 12, wherein the dyeing procedure is carried out under high-temperature (HT) conditions by the exhaustion dyeing technique.

**17.** The process as claimed in claim 12, wherein the dyeing procedure is carried out by the exhaustion dyeing technique under atmospheric conditions at the boiling temperature of the aqueous dyeing medium, if appropriate in the presence of a carrier.

**18.** The process as claimed in claim 12, wherein the dye formulation as claimed in claims 1 to 5 is used for the dyeing procedure in combination with at least one further dye mix component as claimed in claims 6 or 7.

**19.** A textile material consisting of synthetic fibers by itself or as component of mixtures containing these synthetic fibers, which has been dyed by means of a dye formulation as claimed in claims 1 to 9.

**20.** A textile material consisting of synthetic fibers by itself or as component of mixtures containing these synthetic fibers, which has been dyed by a process as claimed in claims 12 to 18.

## Revendications

**1.** Préparation de colorants sous forme d'un mélange à plusieurs composants ou d'un cristal mixte de colorants azoïques bleus, utilisables en dispersion, préparation caractérisée en ce qu'elle consiste en

10 à 40 parties en poids du colorant de formule I, et en 5 à 30 parties en poids du colorant de formule II

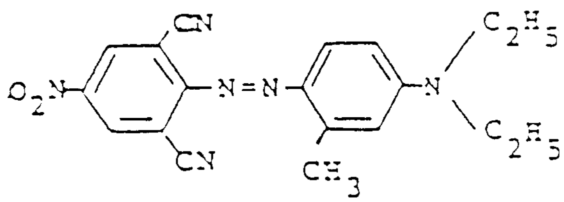

(I)

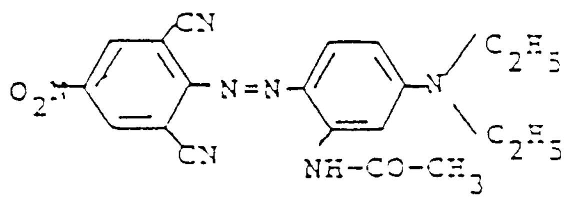

(II)

et éventuellement de colorants répondant aux formules III et/ou IV

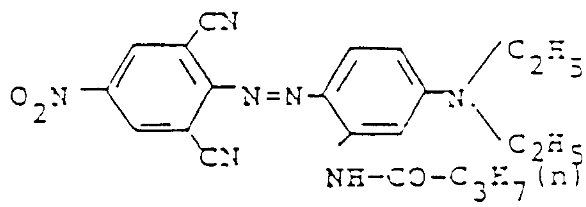

(III)

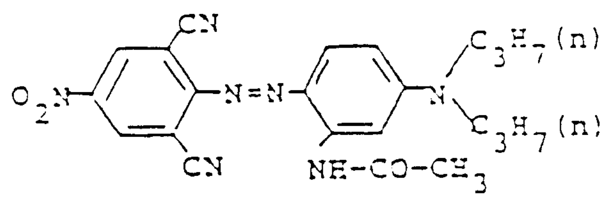

(IV)

ainsi qu'en les colorants répondant aux formules V et/ou VI et/ou VII et/ou VIII

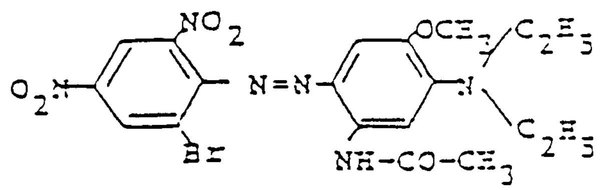

(V)

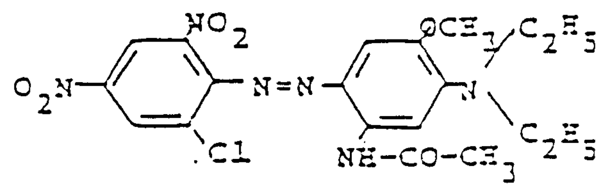

(VI)

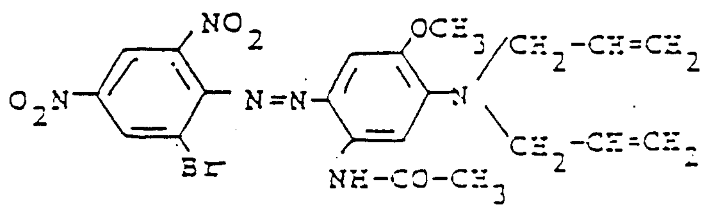

(VII)

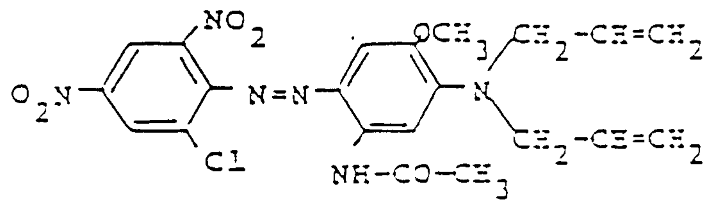

(VIII)

ou en ce que la préparation contient ces colorants , et en ce que les quantités, indiquées en partie, des colorants individuels se trouvant à la base du mélange sont chaque fois calculées sur la base d'un poids total de la préparation de 100 parties en poids en les colorants répondant aux formules I à VIII et en ce qu'on se rapporte à la teneur en du colorant pur.

**2.** Préparation de colorants selon la revendication 1, caractérisée en ce qu'elle présente un mélange ou un cristal mixte des colorants répondant aux formules I, II et III ainsi que d'un des colorants répondant aux formules V, VI, VII ou VIII.

**3.** Préparation de colorants selon la revendication 1, caractérisée en ce qu'elle constitue un mélange ou un cristal mixte des colorants répondant aux formules I, II et IV, ainsi que d'un des colorants répondant aux formules V, VI, VII ou VIII.

**4.** Préparation de colorants selon la revendication 1 ou 2 ou selon la revendication 1 ou 3, caractérisée en ce qu'elle consiste en :

10 à 40 parties en poids du colorant de formule I;

et 5 à 30 parties en poids du colorant de formule II,

et 0 à 20 parties en poids des colorants répondant aux formules III et/ou IV, ainsi qu'en 20 à 75 parties en poids des colorants répondant aux formules V, VI, VII et/ou VIII, les quantités, indiquées en parties, des colorants individuels se trouvant à la base du mélange étant chaque fois calculées pour un poids total de la préparation de 100 parties en poids des colorants répondant aux formules I à VIII, et les parties se rapportant à la teneur en du colorant pur.

**5.** Préparation de colorants selon une ou plusieurs des revendications 1 à 4, caractérisée en ce qu'elle consiste en :

15 à 30 parties en poids du colorant de formule I,

et 10 à 20 parties en poids du colorant de formule II,

et 3 à 15 parties en poids des colorants répondant aux formules III et/ou IV,

ainsi qu'en 35 à 70 parties en poids des colorants répondant aux formules V, VI, VII et/ou VIII,

et en ce que les quantités, indiquées en parties, des colorants individuels de base sont chaque fois calculées pour un poids total de la préparation de 100 parties en poids en les colorants répondant aux formules I à VIII et en ce qu'on se rapporte à la teneur en des colorants purs.

**6.** Préparation de colorants selon une ou plusieurs des revendications I à V, caractérisée en ce qu'elle contient en outre au moins un autre colorant dispersable ayant une structure chimique différente de celles des colorants selon les formules I à VIII, et qui donne en soi comme nuance également du bleu.

**7.** Préparation de colorants selon une ou plusieurs des revendications 1 à 6, caractérisée en ce qu'elle contient en outre au moins un autre colorant, dispersable, de structure chimique différente de celle des colorants selon les formules I à VIII, et qui donne en soi une nuance autre que du bleu.

**8.** Préparation de colorants selon une ou plusieurs des revendications 1 à 5, caractérisée en ce que le mélange ou le cristal mixte des colorants dispersables répondant aux formules I à VIII, est présent, éventuellement avec la présence d'au moins un autre colorant composant selon les revendications 6 ou 7, sous forme d'une fine répartition obtenue par broyage à l'aide de dispersants, à l'état d'un produit terminé prêt pour la teinture.

**9.** Préparation de colorants selon la revendication 8, formée à partir des colorants dispersables répondant aux formules I à VIII, et que l'on peut obtenir :

- par mélangeage de préparations de colorants terminés et formés des colorants individuels de base ou,
- par finition commune des colorants individuels de base, sous forme d'un mélange, éventuellement dans des conditions permettant la formation d'un cristal mixte à partir des composants individuels, ou
- par finition d'un cristal mixte, précipité par copulation azoïque commune ou par échange commun du groupe cyano, à partir des colorants individuels de base, éventuellement avec participation d'au moins un autre colorant composant de mélange selon les revendications 6 ou 7.

**10.** Utilisation d'une préparation de colorants selon l'une ou plusieurs revendications 1 à 5, comme colorants bleus utilisables en dispersion, pour l'obtention, dans un procédé de teinture par épuisement, de nuance de teintes types ou de combinaisons sur des fibres de synthèse, présentées seules, ou sur des mélanges présentant de telles fibres de synthèse.

**11.** Utilisation d'une préparation de colorants selon une ou plusieurs des revendications 1 à 5, en combinaison avec au moins un autre colorant composant de mélange selon les revendications 6 ou 7, pour l'obtention, dans un procédé de teinture par épuisement, d'une autre nuance que le bleu.

**12.** Procédé de teinture par épuisement d'une matière textile en des fibres synthétiques, présentées seules, ou comme faisant partie de mélanges présentant de telles fibres synthétiques avec des fibres naturelles ou des fibres régénérées, procédé caractérisé en ce qu'on utilise comme colorant bleu en dispersion, pour des teintures types ou de combinaison, une préparation de colorants selon les revendications 1 à 5.

**13.** Procédé selon la revendication 12, caractérisé en ce que la matière en des fibres synthétiques est constitué de fibres de polyester ou de fibres de 2 1/2 acétate de cellulose ou de fibres de triacétate de cellulose.

**14.** Procédé selon la revendication 13, caractérisé en ce qu'il s'agit, pour la matière en des fibres de polyester, d'un copolymère d'un monomère de type ester avec un polyéthylène glycol, de l'acide isophtalique ou un composé du phosphore polymérisable.

**15.** Procédé selon la revendication 12 , caractérisé en ce que les mélanges présentant des fibres synthétiques sont constitués de matières en fibres de polyester avec de la laine et/ou des fibres de cellulose.

**16.** Procédé selon la revendication 12, caractérisé en ce que l'opération de teinture est conduite selon la technique de la teinture par épuisement dans des conditions de haute température (HT).

**17.** Procédé selon la revendication 12, caractérisé en ce que l'opération de teinture est réalisée selon la technique de la teinture par épuisement dans des conditions atmosphériques à la température de l'ébullition du milieu aqueux de teinture, éventuellement en présence d'un véhicule.

**18.** Procédé selon la revendication 12, caractérisé en ce que l'on utilise la préparation des colorants selon les revendications 1 à 5, pour une opération de teinture en combinaison, avec au moins un autre composant de mélange de colorants selon les revendications 6 ou 7.

**19.** Matière textile en des fibres synthétiques, seules ou faisant partie de mélanges présentant de telles fibres synthétiques, qui a été teinte à l'aide d'une préparation de colorants selon les revendications 1 à 9.

**20.** Matière textile en des fibres synthétiques, seules ou faisant partie de mélanges présentant de telles fibres synthétiques, qui a été teinte selon un procédé d'après les revendications 12 à 18.